# EUROPÄISCHE PATENTSCHRIFT

(11) **EP 0 508 135 B1**
(45) Veröffentlichungstag und Bekanntmachung des Hinweises auf die Patenterteilung: **27.07.1994**
(21) Anmeldenummer: 92104171.1
(22) Anmeldetag: 11.03.1992
(51) Int. Cl.: F16B 39/30, F16B 39/00, F16B 33/02

(54) **Schraube**
Screw
Vis

(30) Priorität: 11.04.1991 DE 4111854
(43) Veröffentlichungstag der Anmeldung: 14.10.1992
(73) Patentinhaber: SFS Industrie Holding AG, 9435 Heerbrugg (CH)
(72) Erfinder: Schneider, Alfred, CH-9450 Altstätten (CH); Hangartner, Elmar, CH-9436 Balgach (CH)
(74) Vertreter: Ludescher, Hans

(56) Entgegenhaltungen:
- DE-A- 2 157 373
- DE-B- 1 500 896
- DE-B- 2 021 317
- DE-B- 2 049 255
- US-A- 3 426 820
- US-A- 3 461 470

## Beschreibung

Die Erfindung betrifft eine Schraube mit einem auf wenigstens einem Teil seiner Länge mit einem Gewinde versehenen Schaft, wobei in Einschraubrichtung der Schraube gesehen ein erster Gewindeabschnitt mit zirkularer Querschnittsform und ein zweiter Gewindeabschnitt mit einer gleichdickartigen, z.B. trilobularen Querschnittsform aufeinander folgen, und wobei der Hüllkreis des Gewindeabschnittes mit zirkularer Querschnittsform kleiner ist als der Hüllkreis an den Hochstellen des Gewindeabschnittes mit gleichdickartiger Querschnittsform und die Gewindegänge beider Gewindeabschnitte die gleiche Gewindesteigung aufweisen.

Eine Schraube der vorgenannten Art ist aus der US 34 26 820 bekannt. Bei dieser bekannten Schraube geht es im wesentlichen darum, bei der Befestigung eines Teiles an einem Unterbau einen festen Sitz der Schraube zu erzielen und ein Lösen derselben zu verhindern. Es ist deshalb der erste, zirkulare Gewindeabschnitt auch relativ kurz ausgeführt, wogegen der zweite, mit einer gleichdickartigen Querschnittsform ausgeführte, selbstsperrende Gewindeabschnitt über den Hauptteil der Länge des Schraubenschaftes geführt ist. Diese Schraube ist eine Befestigungsschraube, weshalb der Bereich des Schraubenschaftes mit gleichdickartiger Querschnittsform möglichst lang gemacht wird, um das Drehmoment und damit die Sicherung zu erhöhen. Im Gegensatz zu einer solchen Befestigungsschraube muß bei einer Justier- bzw. Stellschraube die Möglichkeit eines exakten Ein- oder Nachstellens gegeben sein, d.h. die Stellschraube muß sich mit gleichmäßigem Drehmoment verdrehen lassen, ohne daß es dabei zu ruckartigen Drehbewegungen kommt. Trotzdem ist aber eine ausreichende Sicherung notwendig, um die eingestellte Lage der Stellschraube festzulegen. Die bekannte Befestigungsschraube ist wegen des erforderlichen hohen Drehmoments nicht sinnvoll als Stellschraube einsetzbar.

Andererseits sind eine Reihe von Schrauben bekannt geworden (DE-B 20 21 317; DE-B 20 49 255), bei welchen auf dem Gewindeabschnitt oder auf einem Teil des Gewindes Sicherungsmittel in Form von Klebstoff- oder Kunststoffbeschichtungen vorgesehen sind. Beim Einschrauben wird der Kleb- oder Kunststoff verformt und gleicht das Spiel zwischen dem Innen- und Außengewinde aus, so daß ein erhöhtes Drehmoment auftritt. Solche Klebstoff- oder Kunststoffbeschichtungen lassen in der Regel ein Lösen und Wiedereinschrauben nicht zu, weshalb solche Befestigungsschrauben ebenfalls nicht als Stellschrauben geeignet sind. Darüber hinaus sind diese Beschichtungen temperaturempfindlich und lassen bei Temperaturerhöhung verbunden mit geringem Druck auf die Schraube geringe Axialbewegungen zu, so daß ständig nachjustiert werden müsste.

Aufgabe der Erfindung ist es, eine Schraube der im Oberbegriff des Anspruchs 1 angegebenen Art so zu verbessern, daß sie als Justier- bzw. Stellschraube eingesetzt werden kann, bei der ein gleichbleibendes Drehmoment gewährleistet und trotzdem eine optimale Verstellsicherheit gegeben ist.

Die Aufgabe wird dadurch gelöst, daß der erste Gewindeabschnitt mit zirkularer Querschnittsform in Achsrichtung des Schaftes gesehen länger als der zweite Gewindeabschnitt mit gleichdickartiger Querschnittsform ausgeführt ist, und daß auf wenigstens einen Teilbereich des ersten Gewindeabschnittes eine Klebstoff-, Lack- oder Kunststoffbeschichtung aufgebracht ist.

Die Schraube nach der Erfindung kann mit ihrem ersten Gewindeabschnitt ohne Probleme in ein Muttergewinde eingedreht werden, wobei durch den zweiten Gewindeabschnitt ein weiteres Eindringen in die Gewinderillen des Muttergewindes erfolgt. Die Hochstellen des zweiten Gewindeabschnittes liegen dann spielfrei und somit mit metallischer Berührung in den Gewindegängen des Muttergewindes an und bilden so eine hervorragende Sicherung gegen ein ungewolltes Verdrehen der Schraube.

Da gerade bei Schrauben relativ geringen Durchmessers keine übermäßig hohen Drehmomente übertragen werden können, ist erfindungsgemäß der erste Gewindeabschnitt in Achsrichtung des Schaftes gesehen länger als der zweite Gewindeabschnitt ausgeführt. Es genügen einige Gewindegänge im Bereich des zweiten Gewindeabschnittes, um eine außerordentlich gute Sicherung der Schraube gegen Verdrehen und gegen axiale Verlagerung zu bewirken.

Zusätzlich ist erfindungsgemäß als weiteres Sicherungsmittel gegen Verdrehen auf wenigstens einen Teilbereich des ersten Gewindeabschnittes eine Klebstoff-, Lack- oder Kunststoffbeschichtung aufgebracht. Dadurch erfolgt nicht nur eine weitere Erhöhung der Sicherungswirkung, sondern zugleich auch eine Abdichtung. Für einen solchen Einsatzzweck eignet sich u.a. auch ein mikroverkapselter Klebstoff. Dieses zusätzliche Sicherungsmittel macht die Schraube auch erschütterungssicher. Die erfindungsgemäße Schraube ist daher nach dem Eindrehen durch extreme Erschütterungen und Vibrationen oder durch Kälte- und Wärmeeinwirkungen nicht mehr lösbar. Nur nach Überwindung eines entsprechend hohen Drehmomentes ist ein Verdrehen der erfindungsgemäßen Schraube möglich, wobei das Muttergewinde aber nicht zerstört wird.

Die Schraube nach der Erfindung eignet sich daher in ganz besonderer Weise als Justier- bzw. Stellschraube, welche auf eine exakte Einschraubtiefe festgelegt werden soll und auch während des Gebrauches oder Transportes in dieser exakten Einstellung bleiben muß.

Die Schraube nach der Erfindung ist also in jedem Eindrehbereich, wo es auf eine exakte Lageeinstellung ankommt, schwergängig verdrehbar und somit exakt auf einen bestimmten Drehwinkel einjustierbar.

Eine konstruktiv sehr einfache Ausführung und wohl die zweckmäßigste im Hinblick auf die Herstellung der Schraube nach der Erfindung ist dann gegeben, wenn der zweite Gewindeabschnitt einen trilobularen Querschnitt aufweist. Die beiden aufeinander folgenden Gewindeabschnitte können daher in einfacher Weise in einem Gewindewalzvorgang hergestellt werden.

Bei der Schraube nach der Erfindung ist es vorteilhaft, den ersten Gewindeabschnitt mit dem üblichen Spiel dem Muttergewinde anzupassen und den zweiten Gewindeabschnitt mit einer engeren Passung dem Muttergewinde anzupassen oder mit geringfügig größerem Hüllkreisdurchmesser auszuführen. Es ist eine exakte Anpassung der Schraube nach der Erfindung an das Muttergewinde möglich, so daß je nach Einsatzzweck der Schraube die optimale Wirkung erzielt wird. Es ist weiter möglich, den Hüllkreis im zweiten Gewindeabschnitt so auszuführen, daß die Hochstellen im Bereich der gleichdickartigen Querschnittsform genau passend in das Muttergewinde eingedreht werden können. Es kann aber auch dieser Hüllkreis mit einem entsprechenden Übermaß ausgeführt werden, so daß die Anpreßkraft der Hochstellen im zweiten Gewindeabschnitt noch verstärkt wird.

Gerade beim Einsatz einer Schraube als Stellschraube, aber auch zum leichteren Einführen der Schraube in das Muttergewinde, ist es zweckmäßig, wenn der Schaft an seinem in Einschraubrichtung vorne liegenden Ende konisch verjüngt ausgebildet ist und das Ende des konischen Abschnittes mit einer kugelabschnittförmigen Kuppe abschließt.

Ein Ausführungsbeispiel der Erfindung wird in der nachstehenden Beschreibung anhand der Zeichnung noch näher erläutert. Es zeigen:
- Fig. 1: eine Seitenansicht einer erfindungsgemäßen Schraube;
- Fig. 2: einen Schnitt nach der Linie II-II in Fig. 1;
- Fig. 3: einen Schnitt nach der Linie III-III in Fig. 1;
- Fig. 4: eine Ansicht der Schraube nach Fig. 1 von oben;
- Fig. 5: einen Schnitt durch ein Werkstück, in welches die erfindungsgemäße Schraube eingedreht ist.

Die Schraube 1 besteht aus einem Schaft 2 und einem Werkzeugangriffsteil 23. Der Schaft 2 ist mit einem Gewinde 3 versehen, wobei hier jede Art von Gewindeform, Gewindesteigung oder Querschnittsform eines Gewindeganges eingesetzt werden kann. Es ist also auch möglich, ein Feingewinde oder beispielsweise ein Trapezgewinde oder ein Sägezahngewinde einzusetzen.

Beim gezeigten Ausführungsbeispiel weist der Werkzeugangriffsteil 23 einen Rundkopf 4 auf, an dessen Oberseite ein Innenangriff 5 vorgesehen ist. Auch bezüglich des Werkzeugangriffsteils 23 sind alle Variationsmöglichkeiten gegeben. Die Schraube 1 selbst kann auch als Stiftschraube ausgeführt werden, also ohne Kopfabschnitt, oder aber mit einem entsprechenden Schraubenkopf versehen werden, der mit einem Innen- oder einem Außenwerkzeugangriff versehen wird.

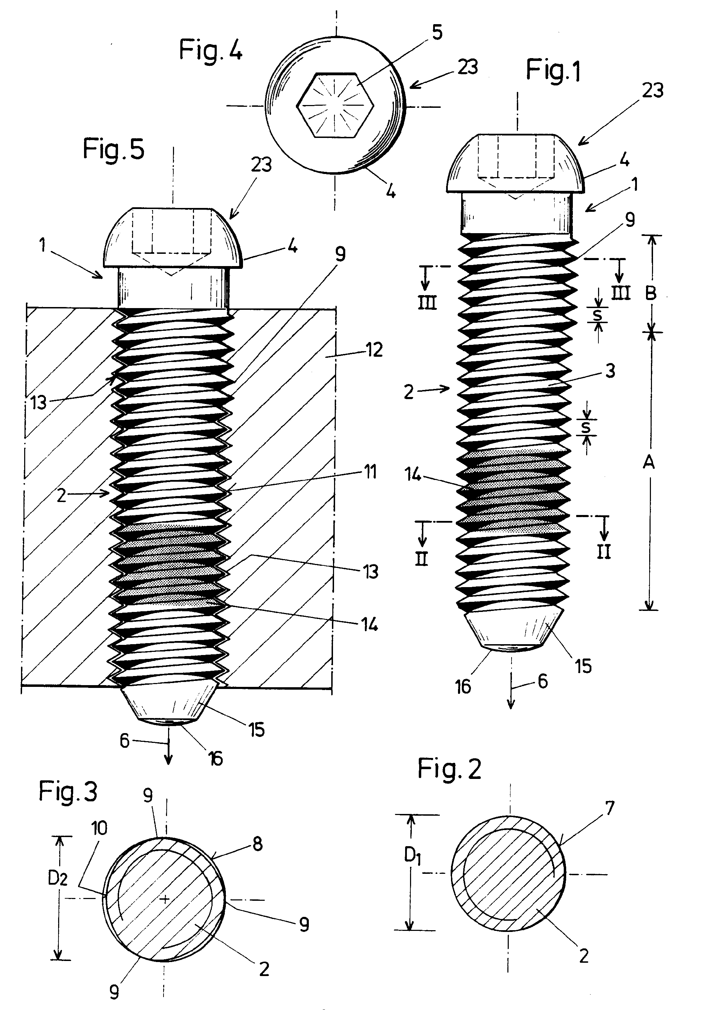

In Einschraubrichtung 6 der Schraube 1 gesehen sind ein erster Gewindeabschnitt A mit zirkularer Querschnittsform und ein zweiter Gewindeabschnitt B mit einer gleichdickartigen, trilobularen Querschnittsform vorgesehen. Die Querschnitte sind den Fig. 2 und 3 zu entnehmen. Der Durchmesser D1 des Hüllkreises 7 im ersten Gewindeabschnitt A ist kleiner als der Durchmesser D2 des Hüllkreises 8 an den Hochstellen 9 des Gewindeabschnittes B mit gleichdickartiger Querschnittsform.

Die Gewindegänge beider Gewindeabschnitte A und B weisen die gleiche Gewindesteigung S auf.

Wie schon erwähnt, ist der zweite Gewindeabschnitt B mit einer gleichdickartigen, trilobularen Querschnittsform ausgestattet. Unter einem "Gleichdick" wird ein geometrischer Körper verstanden, bei dem alle diametral gegenüberliegenden Punkte am äußeren Durchmesser den gleichen Abstand haben, ohne daß der Körper dabei rund ist. Ein solcher geometrischer Körper kann durch Querwalzen in jeder beliebigen Genauigkeit hergestellt werden und weist den Vorteil auf, daß er, wenn er zwischen Walzrollen oder Walzbacken bzw. zwischen Gewinderollen mit einem Gewinde versehen wird, seine unrunde Form beibehält und die Gewindetiefe - falls dies notwendig ist - auf dem gesamten Umfang gleich ist. Bei einem exakten Gleichdick müssen daher eine ungerade Anzahl von Hochstellen 9 vorgesehen werden, d.h., daß immer einer Hochstelle 9 ein abgeflachter Bereich 10 gegenüberliegen muß.

Da die abgeflachten Bereiche 10 bei der Schraube 1 zur Bildung von Sicherungsmitteln keine besondere Funktion innehaben, wäre es auch denkbar, diese abweichend von einem Gleichdick flacher auszuführen. Es wurde deshalb auch von einer gleichdickartigen Querschnittsform gesprochen.

Die einfachste Form für den zweiten Gewindeabschnitt B ist mit einem trilobularen Querschnitt gegeben, wie er auch im Querschnitt nach Fig. 3 gezeigt ist.

Der erste Gewindeabschnitt A ist mit üblichem Spiel dem Muttergewinde 11 in einem entsprechenden Werkstück 12 angepaßt. Der zweite Gewindeabschnitt B ist mit einer engen Passung dem Muttergewinde 11 angepaßt oder aber mit geringfügig größerem Hülldurchmesser ausgeführt. Es ist Fig. 5 auch zu entnehmen, daß zwischen dem Muttergewinde 11 und dem Gewindeabschnitt A das übliche Spiel 13 gegeben ist, da Schrauben- und Muttergewinde schon von der Norm her keine allzu enge Passung aufweisen dürfen, da beim Einschrauben einer Schraube im üblichen Sinne keine allzu großen Drehmomente übertragen werden sollen. Im Bereich des Gewindeabschnittes B hingegen ist zwischen dem Muttergewinde 11 und dem Gewinde im Gewindeabschnitt B im Bereich der Hochstellen 9 kein Spiel mehr vorhanden. Dies ist auf der rechten Seite oben in Fig. 5 ersichtlich. Auf der gegenüberliegenden Seite in Fig. 5 ist ein abgeflachter Bereich 10 im Einsatz, so daß sich hier das entsprechende Spiel 13 ergibt. Es liegen also bei einer trilobularen Querschnittsform auf dem Umfang verteilt nur die drei Hochstellen 9 direkt passend im Muttergewinde 11.

Wie den Angaben in Fig. 1 zu entnehmen ist, ist der erste Gewindeabschnitt A in Achsrichtung länger ausgeführt als der zweite Gewindeabschnitt B. Es wird dadurch vermieden, daß ein allzu hohes Drehmoment aufgebracht werden muß, um die Schraube 1 einzudrehen. Für eine optimale Sicherung der Schraube genügt bereits der Gewindeabschnitt B, der über einige Gewindegänge führt.

Zur zusätzlichen Sicherung der Schraube 1, insbesondere für den Einsatz als Stellschraube oder wenn z.B. auch Dichtigkeitsanforderungen gegeben sind, wird auf einen Teilbereich des Gewindeabschnittes A eine aus einem Klebstoff, Lack oder Kunststoff bestehende Beschichtung 14 aufgebracht. Beispielsweise kann auch ein mikroverkapselter Klebstoff als Beschichtung eingesetzt werden. Es ist auch möglich, diese Beschichtung an jeder beliebigen Stelle des Gewindeabschnittes A oder an mehreren, aufeinander folgenden Stellen oder in Streifen aufzubringen. Es ist aber auch denkbar, eine solche Beschichtung zusätzlich im Bereich des Gewindeabschnittes B vorzusehen.

Bei der hier dargestellten Konstruktion der Schraube 1 ist der Schaft 2 an seinem in Einschraubrichtung 6 vorne liegenden Ende 15 konisch verjüngt ausgebildet. Es ist ferner vorgesehen, daß das Ende des konischen Abschnittes mit einer kugelabschnittförmigen Kuppe 16 abschließt.

Es ist auch möglich, an dem in Einschraubrichtung 6 vorne liegenden Ende 15 einen Innen- oder Außenantrieb vorzusehen, so daß eine Verstellung der Schraube 1 auch von dieser Seite aus möglich ist. Für bestimmte Anwendungsfälle ist dies unter Umständen von Vorteil. Es ist dann aber nach wie vor der Gewindeabschnitt A der erste Gewindeabschnitt in Einschraubrichtung 6, da der Gewindeabschnitt B niemals durch das ganze Muttergewinde 11 hindurchgedreht würde.

Die Schraube 1 eignet sich sowohl für das Eindrehen in Metall als auch in Kunststoff oder Holz.

## Patentansprüche

1. Schraube mit einem auf wenigstens einem Teil seiner Länge mit einem Gewinde (3) versehenen Schaft, wobei in Einschraubrichtung (6) der Schraube (1) gesehen ein erster Gewindeabschnitt (A) mit zirkularer Querschnittsform und ein zweiter Gewindeabschnitt (B) mit einer gleichdickartigen, z.B. trilobularen Querschnittsform aufeinander folgen, und wobei der Hüllkreis (7) des Gewindeabschnittes (A) mit zirkularer Querschnittsform kleiner ist als der Hüllkreis (8) an den Hochstellen (9) des Gewindeabschnittes (B) mit gleichdickartiger Querschnittsform und die Gewindegänge beider Gewindeabschnitte (A, B) die gleiche Gewindesteigung (S) aufweisen, **dadurch** **gekennzeichnet,** daß der erste Gewindeabschnitt (A) mit zirkularer Querschnittsform in Achsrichtung des Schaftes (2) gesehen länger als der zweite Gewindeabschnitt (B) mit gleichdickartiger Querschnittsform ausgeführt ist, und daß auf wenigstens einen Teilbereich des ersten Gewindeabschnittes (A) eine Klebstoff-, Lack- oder Kunststoffbeschichtung (14) aufgebracht ist.

2. Schraube nach Anspruch 1, dadurch gekennzeichnet, daß der Schaft (2) an seinem in Einschraubrichtung (6) vorne liegenden Ende (15) konisch verjüngt ausgebildet ist und das Ende des konischen Abschnittes mit einer kugelabschnittförmigen Kuppe (16) abschließt.

## Claims

1. A screw with a shank provided with a thread (3) along at least part of its length, wherein, viewed in the screwing-in direction (6) of the screw (1), a first threaded portion (A) of circular cross-sectional shape and a second threaded portion (B) of constant-diameter type cross-sectional shape, for example trilobular cross-sectional shape, follow one another, and wherein the enveloping circle (7) of the threaded portion (A) of circular cross-sectional shape is smaller than the enveloping circle (8) at the crests (9) of the threaded portion (B) of constant-diameter type cross-sectional shape and the threads of both threaded portions (A, B) have the same thread pitch (S), characterised in that, viewed in the axial direction of the shank (2), the first threaded portion (A) of circular cross-sectional shape is longer than the second threaded portion (B) of constant-diameter type cross-sectional shape, and that an adhesive, lacquer or plastics coating (14) is applied to at least one section of the first threaded portion (A).

2. A screw according to Claim 1, characterised in that the shank (2) is tapered at its end (15) situated at the front in the screwing-in direction (6) and the end of the tapered portion terminates in a cup-shaped dome (16).

## Revendications

1. Vis avec sur au moins une partie de sa longueur une tige munie d'un filetage (3), où, vu dans le sens du vissage (6) de la vis (1) se trouvent successivement une première partie de filetage (A) à forme de section circulaire et une deuxième partie de filetage (B) avec une forme de section de même épaisseur, par exemple trilobulaire, et où le cercle enveloppe (7) de la partie (A) de filetage à forme de section circulaire est plus petit que le cercle enveloppe (8) dans les parties supérieures (9) de la partie de filetage (B) à forme de section de même épaisseur et les filets des deux parties de filetage (A, B) présentent le même pas (S), caractérisée en ce que la première partie de filetage (A) à forme de section circulaire et vue dans le sens axial de la tige (2) est plus longue que la deuxième partie de filetage (B) à forme de section de même épaisseur et que sur au moins un domaine partiel de la première partie de filetage (A) est déposé un revêtement (14) d'adhésif, de laque ou de matière plastique.

2. Vis selon la revendication 1, caractérisée en ce que la tige (2) à son extrémité (15) antérieure dans le sens de vissage (6) se rétrécit en forme de cône et que l'extrémité de la partie conique se termine par une calotte sphérique (16).
